# FASCICULE DE BREVET EUROPEEN

(11) **EP 3 726 071 B1**
(45) Date de publication et mention de la délivrance du brevet: **07.02.2024**
(21) Numéro de dépôt: 20169168.0
(22) Date de dépôt: 10.04.2020
(51) Int. Cl.: F16B 21/07, F16B 5/06, F16B 19/10

(54) **DISPOSITIF DE FIXATION DE DEUX ELEMENTS PERMETTANT SON PRE-ASSEMBLAGE**
BEFESTIGUNGSVORRICHTUNG FÜR ZWEI ELEMENTE, DIE DEREN VORMONTAGE ERMÖGLICHT
DEVICE FOR ATTACHING TWO ELEMENTS ALLOWING ITS PRE-ASSEMBLY

(30) Priorité: 16.04.2019 FR 1904068
(43) Date de publication de la demande: 21.10.2020
(73) Titulaire: A. Raymond et Cie, 38000 Grenoble (FR)
(72) Inventeur: BHIRI, Ridha, 38800 LE PONT DE CLAIX (FR)
(74) Mandataire: IP Trust

(56) Documents cités:
- FR-A1- 2 882 114
- JP-A- 2005 291 294

## Description

### DOMAINE DE L'INVENTION

La présente invention concerne un dispositif de fixation d'éléments. Ce type de dispositif trouve notamment son intérêt dans le domaine de l'automobile.

### ARRIERE PLAN TECHNOLOGIQUE DE L'INVENTION

Dans le domaine automobile, il peut être nécessaire de pouvoir fixer différents éléments entre eux tels que des supports ou modules sur des parties d'un véhicule. Il peut par exemple s'agir de la fixation d'un panneau sur une porte, d'un pare-boue sur une partie de la carrosserie ou encore d'une capucine dans la partie haute de l'habitacle. Il existe plusieurs techniques de fixation pour atteindre ce but, tel que l'emploi de rivets de connexion ou de vis. Toutefois, ces techniques peuvent rendre la fixation compliquée à mettre en place.

On connaît des dispositifs de fixation des documents US8496420 et WO2016171863. Ces documents présentent un dispositif de fixation composé d'une agrafe et d'une goupille. Chaque élément est muni d'une ouverture, et les ouvertures sont mises en regard l'une de l'autre lorsque les deux éléments sont placés l'un contre l'autre. L'agrafe est introduite dans les ouvertures pour placer le dispositif en position d'assemblage, puis la goupille est disposée dans l'agrafe pour verrouiller cette position et fixer fermement ensemble les deux éléments.

Pour utiliser ces dispositifs, il est nécessaire de maintenir les ouvertures des deux éléments en regard l'une de l'autre durant l'insertion du dispositif de fixation. Cela peut se révéler compliqué ou pénible à réaliser dans certains cas, notamment lorsqu'un des deux éléments est très volumineux, de grande taille, ou d'une manière plus générale peu pratique à manipuler. Cela peut être également le cas lorsque la zone de fixation est peu accessible, pour l'opérateur ou pour un outil. On connaît également des dispositifs de fixation des documents JP2005 291294 et FR2882114.

### OBJET DE L'INVENTION

La présente invention vise à remédier au moins en partie au problème précité. Plus précisément, l'invention vise à simplifier la mise en position d'assemblage du dispositif de fixation sur les deux éléments et son verrouillage, notamment lorsque l'un des éléments est peu pratique à manipuler ou lorsque la zone de fixation est peu accessible.

### BREVE DESCRIPTION DE L'INVENTION

En vue de la réalisation de ce but, l'objet de l'invention propose un dispositif de fixation d'un assemblage conforme au libellé de la revendication 1.

Notamment, l'objet de l'invention propose un dispositif de fixation d'un assemblage comprenant au moins un premier élément et un deuxième élément, chaque élément de l'assemblage étant pourvu d'une ouverture destinée à être mise en regard l'une avec l'autre, comprenant :
- une cage composée d'un corps principal creux présentant une ouverture principale et une première extrémité opposée à l'ouverture principale, la cage comprenant en outre des moyens de retenue ;
- une agrafe flexible fixée en saillie de la première extrémité du corps principal, l'agrafe flexible présentant deux branches destinées à s'engager à travers les ouvertures du premier et du deuxième élément pour, dans une position d'assemblage de la cage, retenir les éléments assemblés l'un à l'autre ;les moyens de retenue étant configurés pour retenir la cage au premier élément dans une position de pré-assemblage dans laquelle les branches de l'agrafe ne sont pas engagées dans l'ouverture du premier élément ;
- une goupille engagée dans l'ouverture principale de la cage, la goupille présentant une première extrémité pour recevoir un effort extérieur d'assemblage et une seconde extrémité, la seconde extrémité n'étant pas engagée entre les branches de l'agrafe dans la position de pré-assemblage;le dispositif comprenant également des moyens de couplage sélectifs de la goupille et de la cage configurés pour, lorsque la goupille est couplée à la cage, assurer la transmission de l'effort extérieur d'assemblage à la cage et la déplacer de la position de pré-assemblage à la position d'assemblage, et lorsque la goupille est découplée de la cage, permettre le déplacement libre de la goupille vis-à-vis de la cage pour placer sa seconde extrémité entre les branches de l'agrafe et la verrouiller.

Selon d'autres caractéristiques avantageuses et non limitatives de l'invention, prises seules ou selon toute combinaison revendiquée :
- les moyens de couplage sélectifs sont activables par un élément de découplage disposé sur le premier élément pour découpler la goupille de la cage, lorsque la cage est en position d'assemblage ;
- la cage est pourvue d'éléments de guidage pour la placer en position de pré-assemblage et pour la déplacer en position d'assemblage ;
- les éléments de guidage sont des nervures et/ou rainures ;
- les moyens de retenue comprennent au moins un cran réversible disposé sur la surface externe de la cage ;
- le cran est défini entre un harpon et une rampe ;
- les moyens de couplage sélectifs comprennent au moins une languette flexible disposée sur la goupille ainsi qu'au moins une butée disposée sur une surface interne de la cage, la languette flexible étant configurée pour pouvoir être en contact avec la butée, et ainsi coupler la goupille à la cage ;
- la cage comporte au moins une lumière exposant la languette flexible de la goupille pour la rendre accessible à un élément de découplage susceptible de déformer la languette flexible pour la chasser de la butée et ainsi découpler la goupille de la cage ;
- la première extrémité de la goupille est formée d'une tête plane ;

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 représente un dispositif de fixation conforme à l'invention en vue éclatée ;
[Fig. 2] La figure 2 représente une vue d'ensemble du dispositif de fixation ;
[Fig. 3] La figure 3 représente une vue d'ensemble du premier élément ;
[Fig. 4a] La figure 4a représente une vue en coupe selon le plan (y,z) du dispositif de fixation en position de pré-assemblage ;
[Fig. 4b] La figure 4b représente une vue en coupe selon le plan (x,z) du dispositif de fixation en position de pré-assemblage ;
[Fig. 5] La figure 5 représente une vue en coupe selon le plan (x,z) du dispositif de fixation lorsque celui-ci est en transition de la position de pré-assemblage à la position d'assemblage;
[Fig. 6] La figure 6 représente une vue en coupe selon le plan (x,z) du dispositif de fixation en position d'assemblage ;

### DESCRIPTION DETAILLEE DE L'INVENTION

Par souci de simplification de la description à venir, les mêmes références sont utilisées pour des éléments identiques ou assurant la même fonction. Les figures sont des représentations schématiques qui, dans un objectif de lisibilité, ne sont pas à l'échelle.

### Présentation générale du dispositif de fixation

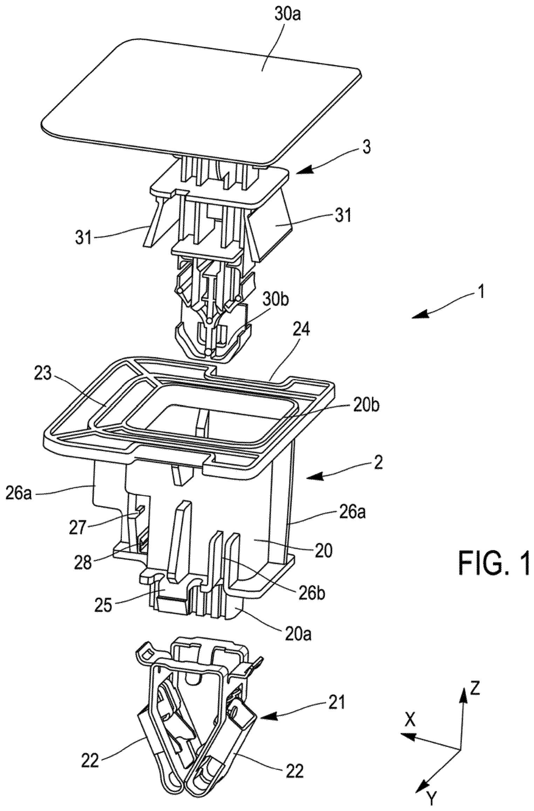

La figure 1 représente un dispositif de fixation 1 d'un assemblage conforme à la présente description, composé d'une goupille 3 et d'une cage 2 munie d'une agrafe flexible 21.

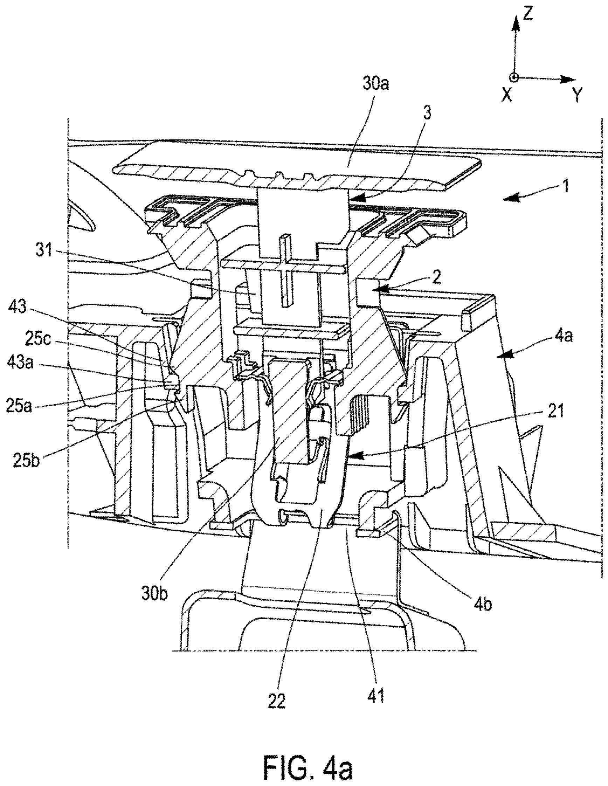

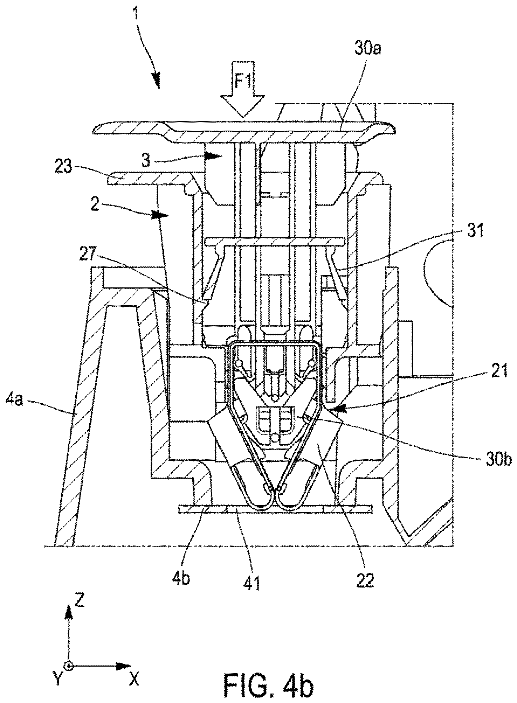

L'assemblage est quant à lui formé d'au moins un premier élément 4a et d'un deuxième élément 4b que l'on cherche à maintenir l'un contre l'autre. A cet effet, les éléments 4a et 4b peuvent respectivement présenter des pattes de fixation. Comme cela sera décrit plus en détail dans la suite de cette description, et en référence aux figures 4 à 6, chaque patte de fixation des éléments 4a, 4b est muni d'une ouverture 41, et les ouvertures sont mises en regard l'une de l'autre lorsque les deux éléments 4a, 4b sont placés l'un contre l'autre en position d'assemblage.

Les éléments 4a et 4b peuvent être de natures variées. Il peut ainsi s'agir d'une capucine, formant un espace de rangement et constituant le premier élément 4a, que l'on souhaite fixer dans la partie haute de l'habitacle du véhicule, constituant le deuxième élément 4b, afin que le conducteur et ses passagers puissent disposer d'un espace de rangement supplémentaire.

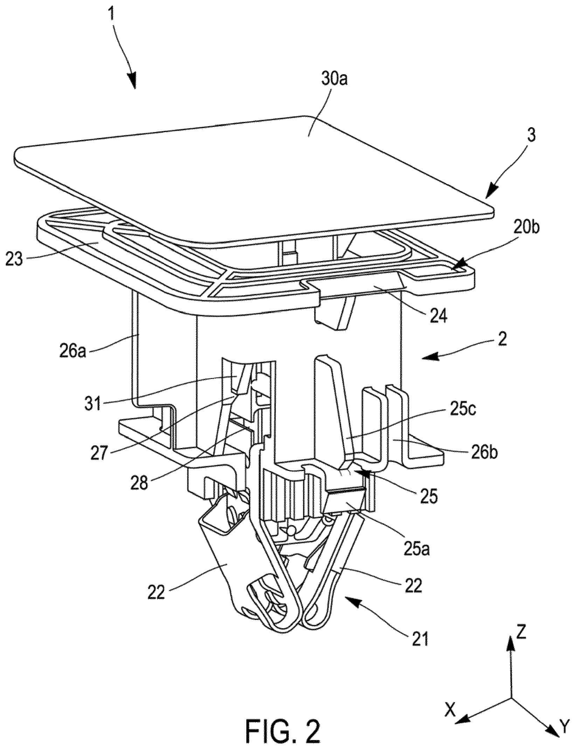

En position de livraison du dispositif de fixation 1, la goupille 3 est insérée dans la cage 2, comme cela est représenté sur la figure 2.

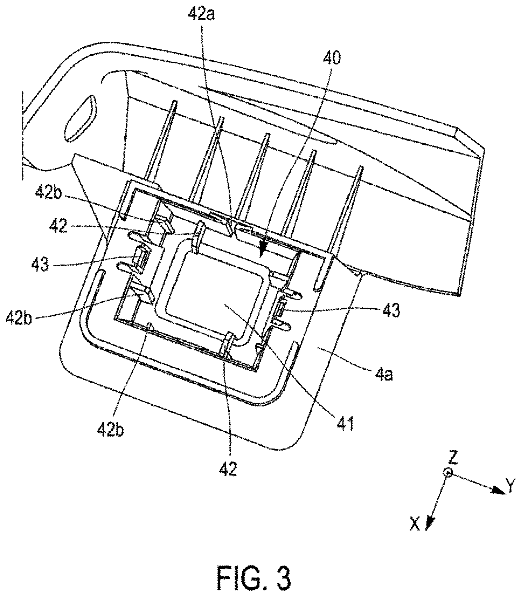

Dans l'exemple représenté sur la figure 3, la patte de fixation du premier élément 4a est formée d'une cavité 40 destinée à accueillir le dispositif de fixation 1 dans une position de pré-assemblage. Pour assembler les deux éléments l'un à l'autre, le dispositif de fixation 1 est dans un premier temps disposé en position de pré-assemblage, en vis-à-vis des ouvertures 41. Cette configuration est représentée sur la figure 4a.

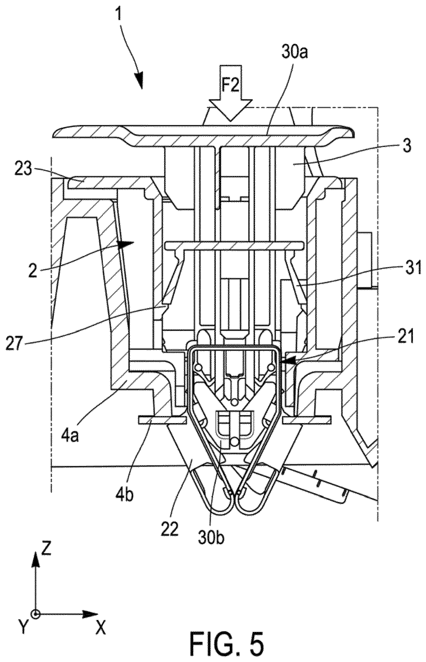

Dans un deuxième temps, et tel que cela est représenté sur la figure 5, un effort extérieur est exercé sur le dispositif de fixation 1 afin que l'agrafe flexible 21 traverse les ouvertures 41 et maintienne les deux éléments 4a, 4b l'un contre l'autre.

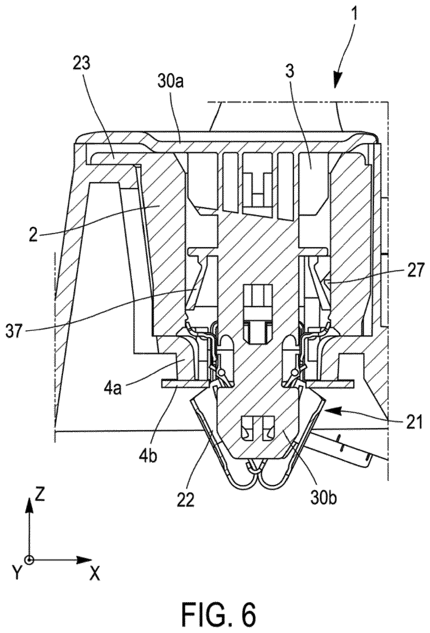

Le dispositif de fixation 1 est alors disposé en position d'assemblage, et il peut être verrouillé en plaçant l'extrémité de la goupille 3 entre les branches de l'agrafe flexible 21 comme cela est représenté sur la figure 6.

### Description détaillée du dispositif de fixation

En référence à la figure 1, la goupille 3 est formé d'un corps allongé et présente une première extrémité 30a, pour recevoir l'effort extérieur d'assemblage, ainsi qu'une seconde extrémité 30b destinée à s'insérer entre les branches de l'agrafe flexible 21 pour verrouiller le dispositif de fixation 1 lorsque celui-ci est en position d'assemblage. Dans l'exemple représenté, la première extrémité 30a de la goupille 3 est formée d'une tête plane 30a dont la surface inférieure, orientée vers la seconde extrémité 30b, forme une surface d'appui destinée à entrer en butée avec un rebord annulaire plan 23 de la cage 2, lorsque le dispositif de fixation 1 est en position d'assemblage et verrouillé. La tête plane 30a peut être munie, optionnellement, d'une fente (non visible sur les figures) pour accueillir l'extrémité d'un outil de démontage du dispositif 1.

La goupille 3 comprend également des moyens de couplage sélectifs 31, ici deux languettes flexibles 31, pour interagir avec des moyens de couplage 27 de la cage 2, comme cela sera décrit en détail dans un passage ultérieur de cette description.

La cage 2 est quant à elle composée d'un corps principal 20 creux présentant une ouverture principale d'introduction de la goupille 3. L'agrafe flexible 21 est fixée, par exemple par clippage, à la cage pour être mise en saillie d'une première extrémité 20a du corps principal 20, à l'opposé de l'ouverture principale. La seconde extrémité 20b du corps principal 20 comprend avantageusement un rebord annulaire plan 23 entourant l'ouverture principale d'introduction de la goupille 3. La seconde extrémité 20b peut également, de manière avantageuse, comprendre une encoche 24 pour faciliter le démontage du dispositif de fixation 1.

L'agrafe 21 présente deux branches 22 destinées à s'engager à travers les ouvertures 41 du premier et deuxième élément 4a, 4b pour les retenir l'un à l'autre dans la position d'assemblage du dispositif de fixation. Les branches 22 en V de l'agrafe 21 peuvent se rapprocher l'une de l'autre par déformation élastique pour traverser les ouvertures 41.

L'agrafe 21 et le corps principal 20 peuvent être formés d'un matériau métallique, mais il est préférable d'utiliser un matériau plastique pour le corps principal 20 afin de limiter les coûts.

Le corps principal 20 comporte également des moyens de retenue 25, disposés sur sa surface externe, permettant de positionner le dispositif de fixation 1 en position de pré-assemblage au premier élément 4a. Comme cela est bien visible sur les figures 2 et 4a, les moyens de retenue peuvent être formés d'au moins un cran réversible 25a, défini entre un harpon 25b et une rampe 25c.

Le premier élément 4a comporte au moins une patte flexible 43 dont l'extrémité forme un ergot 43a destiné à se loger dans le cran réversible 25a pour retenir le dispositif de fixation 1 en position de pré-assemblage.

De manière alternative, il est envisageable d'utiliser une patte 43 non flexible et un harpon 25b flexible, l'essentiel étant que l'un des deux soit flexible.

Comme on l'a déjà évoqué, le corps principal 20 comporte des moyens de couplage sélectifs 27 de la cage 2 et de la goupille 3, ici au moins deux butées 27 disposées sur une surface interne de la cage 2 pour recevoir l'extrémité des languettes flexibles 31 de la goupille 3 lorsque celle-ci est insérée dans la cage 2.

La cage 2 comporte deux découpes ou lumières 28, dont une est bien visible sur les figures 1 et 2, respectivement disposées au niveau des butées 27. Ces lumières 28 permettent d'exposer les languettes flexibles 31 de la goupille 3 lorsque celle-ci reposent sur les butées 27. Un élément de découplage 42 porté par le premier élément 4a est alors susceptible de pénétrer dans la lumière pour activer les moyens de couplage sélectifs 27,31 et découpler la goupille 3 de la cage 2 en déformant la languette flexible 31 pour la chasser de la butée 27. L'élément de découplage 42 peut correspondre à une nervure à flan incliné, ou tout autre forme de butée.

Dans l'exemple représenté, le corps principal 20 comprend, de manière optionnelle, des éléments de guidage 26 pour correctement placer et guider la cage 3 dans la cavité 40 du premier élément 4a, pour positionner le dispositif de fixation 1 en position de pré-assemblage. Il peut s'agir de nervures 26a et/ou de rainures 26b qui coopèrent avec des éléments complémentaires disposés sur le premier élément 4a, comme cela est visible sur la figure 3.

### Mise en oeuvre du dispositif

Dans un premier temps, et avant toute interaction du dispositif de fixation 1 avec l'un des deux éléments 4a et 4b, la goupille 3 est insérée dans la cage 2 afin de coupler la goupille 3 à la cage 2 (figure 2). A cet effet, on fait pénétrer la seconde extrémité 30b de la goupille dans l'ouverture principale de la cage 2. La goupille 3 est correctement couplée à la cage 2, en configuration de livraison, lorsque les languettes 31 sont respectivement en contact avec les butées 27 de la cage 2 (figure 4b). Dans cette configuration de couplage, tout effort extérieur d'assemblage appliqué à la première extrémité 30a de la goupille 3 est transmis à la cage 2. La seconde extrémité 30b de la goupille 3 n'est pas engagée entre les branches de l'agrafe 21, et celles-ci restent donc libres de se déformer pour se rapprocher l'une de l'autre.

Dans une étape de pré-assemblage du dispositif de fixation 1, illustrée par les figures 4a et 4b, la cage 2 est disposée en vis-à-vis de la cavité 40 de sorte à faire coïncider respectivement les nervures 26a et rainures 26b de la cage 2 avec les rainures 42a et nervures 42b du premier élément 4a. Puis le dispositif de fixation 1 est inséré dans la cavité 40, par l'application d'un premier effort F0 sur la tête 30a de la goupille 3.

L'intensité du premier effort F0 appliqué au cours de cette étape est suffisante pour faire progresser le dispositif de fixation 1 dans la cavité 40. On note que ce déplacement est rendu possible car la goupille 3 est couplée à la cage 2, et qu'en conséquence l'effort d'assemblage appliqué à la tête 30a est transmis à la cage 2, ce qui assure son déplacement dans la cavité 40. Les pattes flexibles 43 sont déformées par les harpons 25b et on vient ainsi clipper les ergots 43a dans les crans 25a. On place et on retient de la sorte le dispositif de fixation 1 en position de pré-assemblage. L'intensité du premier effort F0 est insuffisant pour extraire les ergots 43a des crans 25a, les ergots 43a étant retenus dans les crans 25a par les rampes 25c. Une intensité plus importante de l'effort permettrait toutefois de déformer à nouveau les pattes flexibles 43 et faire glisser les ergots 43a sur les rampes 25c. L'inclinaison des rampes détermine l'intensité de cet effort de désengagement des ergots. De manière avantageuse, l'inclinaison des rampes, par rapport au corps de la goupille 3, est comprise entre 10 et 80 degrés.

La cage 2 est donc retenue à l'issue de cette étape de pré-assemblage et en l'absence d'effort plus important appliqué sur la goupille 3, dans une position de pré-assemblage sur le premier élément 4a. Dans la position de pré-assemblage, le dispositif de fixation 1 ne traverse pas encore l'ouverture 41 du premier élément 4a, les branches de l'agrafe 21 ne sont pas engagées dans les ouvertures 41, et le dispositif de fixation 1 est simplement maintenu assemblé au premier élément 4a.

Cette étape permet de simplifier l'assemblage du premier et du deuxième élément 4a, 4b, le dispositif de fixation 1 étant maintenu au premier élément 4a. Cela est notamment intéressant lorsque le premier élément 4a est peu pratique à manipuler, par sa taille et/ou son poids, ou lorsque la zone de fixation est peu accessible.

Dans une deuxième étape dite « de transition » qui succède à l'étape de pré assemblage, le deuxième élément 4b est disposé de sorte que son ouverture 41 soit placée en vis-à-vis de celle du premier élément 4a.

Un nouvel effort d'assemblage F1, d'intensité supérieure à celle ayant permis de mettre la cage 2 en position de pré-assemblage, est ensuite appliqué sur la goupille 3 et transmis à la cage 2. Cet effort conduit à désengager les ergots 43a portés par les pattes flexibles 43 du cran 25a. Le dispositif de fixation 1 poursuit alors sa progression dans la cavité 40, guidée par les moyens de guidage. Les branches 22 de l'agrafe 21 entrent en contact avec le contour des ouvertures 41 du premier et deuxième éléments 4a, 4b, se déforment et se rapprochent l'une de l'autre pour pouvoir traverser ces ouvertures 41.

La progression du dispositif de fixation 1 est interrompue lorsque le rebord annulaire 23 de la cage 2 est mis en butée avec le premier élément 4a. Dans cette position d'assemblage, les branches 22 de l'agrafe 21 ont traversé les ouvertures 41 et ont repris leur forme initiale. L'agrafe 21 retient les éléments 4a et 4b assemblés l'un à l'autre.

Dans le même temps, les éléments de découplage 42 disposés sur le premier élément 4a sont entrés en contact avec les languettes 31 à travers la lumière 28 de la cage 2 comme cela est visible sur la figure 5. Les éléments de découplage 42 déforment les languettes flexibles 31 pour les chasser des butées 27. On découple ainsi la goupille 3 de la cage 2, et les efforts appliqués à la goupille 3 ne sont plus transmis à la cage 2. On voit donc que les moyens de couplage sélectifs 27,31 sont activables par les éléments de découplage 42 pour découpler la goupille 3 de la cage 2 lorsque la cage 2 est en position d'assemblage.

A l'issue de cette étape de transition, la cage 2 est en position d'assemblage et la goupille 3 est découplée de la cage 2.

Dans une étape suivante dite de verrouillage, représentée sur la figure 6, l'effort appliqué à la goupille 3 conduit à la déplacer librement par rapport à la cage 2 et à placer sa seconde extrémité 30b entre les branches 22 de l'agrafe 21. On verrouille ainsi le dispositif de fixation 1 et on empêche le retrait de l'agrafe 21 des ouvertures 41. La seconde extrémité 30b de la goupille 3 peut par exemple prendre un appui forcé sur les branches 22 pour les maintenir écartées l'une de l'autre.

Le dispositif de fixation 1 à l'issue de cette étape est donc verrouillé. Il n'est pas possible de désassembler les deux éléments 4a et 4b l'un de l'autre sans avoir au préalable déverrouillé le dispositif de fixation 1, c'est à dire sans avoir extrait au moins partiellement la goupille 3 de la cage 2. Dans cette configuration de verrouillage, la tête 30a de la goupille 3 est en butée avec le rebord 23 de la cage 2, fournissant un témoin visuel de l'état verrouillé du montage.

L'utilisation de ce dispositif de fixation 1 permet donc d'assembler deux éléments 4a et 4b entre eux simplement en appliquant un effort d'assemblage sur la tête 30a de la goupille 3.

Si l'on souhaite déverrouiller le dispositif de fixation 1 et désassembler les deux éléments 4a et 4b, il suffit de désengager la seconde extrémité 30b de la goupille 3 des branches 22 de l'agrafe 2 en décollant la tête 30a du rebord 23 de la cage 2. Cela est notamment possible par l'utilisation d'un outil, tel qu'un tournevis plat, dont on peut insérer l'extrémité entre la tête 30a et le rebord 23 de la cage 2, par le biais de l'encoche 24 ou dans la fente de la tête 30a.

Bien entendu l'invention n'est pas limitée au mode de mise en oeuvre décrit et on peut y apporter des variantes de réalisation sans sortir du cadre de l'invention tel que défini par les revendications.

## Revendications

1. Dispositif de fixation (1) d'un assemblage comprenant au moins un premier élément (4a) et un deuxième élément (4b), chaque élément (4a, 4b) de l'assemblage étant pourvu d'une ouverture (41) destinée à être mise en regard l'une avec l'autre, comprenant :
- une cage (2) composée d'un corps principal creux (20) présentant une ouverture principale et une première extrémité (20a) opposée à l'ouverture principale, la cage comprenant en outre des moyens de retenue (25) ;
- une agrafe flexible (21) fixée en saillie de la première extrémité (20a) du corps principal (20), l'agrafe flexible (21) présentant deux branches (22) destinées à s'engager à travers les ouvertures (41) du premier (4a) et du deuxième élément (4b) pour, dans une position d'assemblage de la cage (2), retenir les éléments (4a, 4b) assemblés l'un à l'autre ;
les moyens de retenue (25) étant configurés pour retenir la cage (2) au premier élément (4a) dans une position de pré-assemblage dans laquelle les branches (22) de l'agrafe (21) ne sont pas engagées dans l'ouverture (41) du premier élément (4a) ;
- une goupille (3) engagée dans l'ouverture principale de la cage (2), la goupille (3) présentant une première extrémité (30a) pour recevoir un effort extérieur d'assemblage et une seconde extrémité (30b), la seconde extrémité n'étant pas engagée entre les branches de l'agrafe dans la position de pré-assemblage;
le dispositif (1) comprenant également des moyens de couplage sélectifs (27, 31) de la goupille (3) et de la cage (2) configurés pour, lorsque la goupille (3) est couplée à la cage (2), assurer la transmission de l'effort extérieur d'assemblage à la cage (2) et la déplacer de la position de pré-assemblage à la position d'assemblage, et lorsque la goupille (3) est découplée de la cage (2), permettre le déplacement libre de la goupille (3) vis-à-vis de la cage (2) pour placer sa seconde extrémité (30b) entre les branches (22) de l'agrafe (21) et la verrouiller.

2. Dispositif de fixation (1) selon la revendication précédente dans lequel la cage (2) est pourvue d'éléments de guidage (26a, 26b) pour la placer en position de pré-assemblage et pour la déplacer en position d'assemblage.

3. Dispositif de fixation (1) selon la revendication précédente dans lequel les éléments de guidage (26a, 26b) sont des nervures (26a) et/ou rainures (26b).

4. Dispositif de fixation (1) selon l'une des revendications précédentes dans lequel les moyens de retenue (25) comprennent au moins un cran réversible (25a) disposé sur la surface externe de la cage (2).

5. Dispositif de fixation (1) selon la revendication précédente dans lequel le cran (25a) est défini entre un harpon (25b) et une rampe (25c).

6. Dispositif de fixation (1) selon l'une des revendications précédentes dans lequel les moyens de couplage sélectifs (27, 31) comprennent au moins une languette flexible (31) disposée sur la goupille (3) ainsi qu'au moins une butée (27) disposée sur une surface interne de la cage (2), la languette flexible (31) étant configurée pour pouvoir être en contact avec la butée (27), et ainsi coupler la goupille (3) à la cage (2).

7. Dispositif de fixation (1) selon la revendication précédente dans lequel la cage (2) comporte au moins une lumière (28) exposant la languette flexible (31) de la goupille (3) pour la rendre accessible à un élément de découplage (42) susceptible de déformer la languette flexible (31) pour la chasser de la butée (27) et ainsi découpler la goupille (3) de la cage (2).

8. Dispositif de fixation (1) selon l'une des revendications précédentes dans lequel la première extrémité (30a) de la goupille (3) est formée d'une tête plane (30a).

## Patentansprüche

1. Befestigungsvorrichtung (1) einer Anordnung, umfassend mindestens ein erstes Element (4a) und ein zweites Element (4b), wobei jedes Element (4a, 4b) der Anordnung mit einer Öffnung (41) versehen ist, die dazu bestimmt ist, einander gegenübergestellt zu werden, umfassend:
- einen Halter (2), der aus einem Haupthohlkörper (20), der eine Hauptöffnung und ein der Hauptöffnung gegenüberliegendes erstes Ende (20a) aufweist, zusammengesetzt ist, der Halter ferner umfassend Haltemittel (25);
- eine flexible Klammer (21), die von dem ersten Ende (20a) des Hauptkörpers (20) vorstehend befestigt ist, wobei die flexible Klammer (21) zwei Schenkel (22), die zum Eingreifen durch die Öffnungen (41) des ersten (4a) und des zweiten Elements (4b) bestimmt sind, aufweist, um in einer Montageposition des Halters (2) die montierten Elemente (4a, 4b) aneinander zu halten;
wobei die Haltemittel (25) konfiguriert sind, um den Halter (2) an dem ersten Element (4a) in einer Vormontageposition zu halten, in der die Schenkel (22) der Klammer (21) nicht in die Öffnung (41) des ersten Elements (4a) eingreifen;
- einen Stift (3), der in die Hauptöffnung des Halters (2) eingreift, wobei der Stift (3) ein erstes Ende (30a) zum Aufnehmen einer äußeren Montagekraft und ein zweites Ende (30b) aufweist, wobei das zweite Ende in der Vormontageposition nicht zwischen den Schenkeln der Klammer in Eingriff ist;
die Vorrichtung (1) ebenso umfassend selektive Kopplungsmittel (27, 31) des Stifts (3) und des Halters (2), die konfiguriert sind, um, wenn der Stift (3) mit dem Halter (2) gekoppelt ist, die Übertragung der äußeren Montagekraft auf den Halter (2) zu gewährleisten und ihn aus der Vormontageposition in die Montageposition zu bewegen, und, wenn der Stift (3) von dem Halter (2) entkoppelt ist, die freie Bewegung des Stifts (3) gegenüber dem Halter (2) zu ermöglichen, um sein zweites Ende (30b) zwischen den Schenkeln (22) der Klammer (21) zu platzieren und es zu verriegeln.

2. Befestigungsvorrichtung (1) nach dem vorstehenden Anspruch, wobei der Halter (2) mit Führungselementen (26a, 26b) versehen ist, um ihn in eine Vormontageposition zu platzieren und um ihn in die Montageposition zu bewegen.

3. Befestigungsvorrichtung (1) nach dem vorstehenden Anspruch, wobei die Führungselemente (26a, 26b) Rippen (26a) und/oder Rillen (26b) sind.

4. Befestigungsvorrichtung (1) nach einem der vorstehenden Ansprüche, wobei die Haltemittel (25) mindestens eine umkehrbare Einkerbung (25a) umfassen, die an der Außenfläche des Halters (2) eingerichtet ist.

5. Befestigungsvorrichtung (1) nach dem vorstehenden Anspruch, wobei die Kerbe (25a) zwischen einem Haken (25b) und einer Rampe (25c) definiert ist.

6. Befestigungsvorrichtung (1) nach einem der vorstehenden Ansprüche, wobei die selektiven Kopplungsmittel (27, 31) mindestens eine flexible Zunge (31), die an dem Stift (3) eingerichtet ist, sowie mindestens einen Anschlag (27), der an einer Innenoberfläche des Halters (2) eingerichtet ist, umfassen, wobei die flexible Zunge (31) konfiguriert ist, um mit dem Anschlag (27) in Berührung kommen zu können und dadurch den Stift (3) mit dem Halter (2) zu koppeln.

7. Befestigungsvorrichtung (1) nach dem vorstehenden Anspruch, wobei der Halter (2) mindestens einen Schlitz (28) vorweist, der die flexible Zunge (31) des Stifts (3) freilegt, um sie für ein Entkopplungselement (42) zugänglich zu machen, das die flexible Zunge (31) verformen kann, um sie von dem Anschlag (27) zu treiben und so den Stift (3) von dem Halter (2) zu entkoppeln.

8. Befestigungsvorrichtung (1) nach einem der vorstehenden Ansprüche, wobei das erste Ende (30a) des Stifts (3) aus einem flachen Kopf (30a) ausgebildet ist.

## Claims

1. An attachment device (1) for an assembly comprising at least a first element (4a) and a second element (4b), each element (4a, 4b) of the assembly being provided with an opening (41) intended to be placed opposite each other, comprising:
- a cage (2) composed of a hollow main body (20) having a main opening and a first end (20a) opposite the main opening, the cage further comprising retaining means (25);
- a flexible clip (21) attached to the first end (20a) of the main body (20), the flexible clip (21) having two branches (22) intended to engage through the openings (41) of the first (4a) and the second element (4b) to, in an assembly position of the cage (2), retain the elements (4a, 4b) assembled to each other;
the retaining means (25) being configured to retain the cage (2) to the first element (4a) in a pre-assembly position in which the branches (22) of the clip (21) are not engaged in the opening (41) of the first element (4a);
- a pin (3) engaged in the main opening of the cage (2), the pin (3) having a first end (30a) for receiving an external assembly force and a second end (30b), the second end not being engaged between the branches of the clip in the pre-assembly position;
the device (1) also comprising selective coupling means (27, 31) of the pin (3) and of the cage (2) configured to, when the pin (3) is coupled to the cage (2), ensure the transmission of the external assembly force to the cage (2) and to move it from the pre-assembly position to the assembly position, and when the pin (3) is decoupled from the cage (2), allow the free movement of the pin (3) relative to the cage (2) to place its second end (30b) between the branches (22) of the clip (21) and to lock it.

2. The attachment device (1) according to the preceding claim, wherein the cage (2) is provided with guide elements (26a, 26b) to place it in the pre-assembly position and to move it into the assembly position.

3. The attachment device (1) according to the preceding claim, wherein the guide elements (26a, 26b) are ribs (26a) and/or grooves (26b).

4. The attachment device (1) according to one of the preceding claims, wherein the retaining means (25) comprise at least one reversible notch (25a) arranged on the outer surface of the cage (2).

5. The attachment device (1) according to the preceding claim wherein the notch (25a) is defined between a harpoon (25b) and a ramp (25c).

6. The attachment device (1) according to one of the preceding claims, wherein the selective coupling means (27, 31) comprise at least one flexible tongue (31) arranged on the pin (3) as well as at least one stop (27) arranged on an inner surface of the cage (2), the flexible tongue (31) being configured to be able to be in contact with the stop (27), and thus coupling the pin (3) to the cage (2).

7. The attachment device (1) according to the preceding claim, wherein the cage (2) comprises at least one opening (28) exposing the flexible tongue (31) of the pin (3) to make it accessible to a decoupling element (42) capable of deforming the flexible tongue (31) to drive it from the stop (27) and thus decouple the pin (3) from the cage (2).

8. The attachment device (1) according to one of the preceding claims, wherein the first end (30a) of the pin (3) is formed by a planar head (30a).
